(19) Europäisches Patentamt
European Patent Office
Office européen des brevets

(11) EP 1 034 245 B1

(12) EUROPEAN PATENT SPECIFICATION

(45) Date of publication and mention of the grant of the patent:
**17.09.2003 Bulletin 2003/38**

(21) Application number: **98956256.6**

(22) Date of filing: **27.10.1998**

(51) Int Cl.[7]: **C11D 3/48**, C11D 3/18, C11D 3/43, A01N 33/12 // (A01N65/00, 25:02)

(86) International application number:
**PCT/US98/22783**

(87) International publication number:
**WO 99/028428 (10.06.1999 Gazette 1999/23)**

# (54) CONCENTRATED LIQUID CLEANER FOR HARD SURFACES

KONZENTRIERTES FLÜSSIGES REINIGUNGSMITTEL FÜR HARTE OBERFLÄCHEN

NETTOYANT LIQUIDE CONCENTRE POUR SURFACES DURES

(84) Designated Contracting States:
**BE DE ES FR GB IT NL**

(30) Priority: **28.11.1997 GB 9725091**
**28.11.1997 GB 9725098**
**28.11.1997 GB 9725093**

(43) Date of publication of application:
**13.09.2000 Bulletin 2000/37**

(73) Proprietor: **Reckitt Benckiser Inc.**
**Wayne, New Jersey 07474 (US)**

(72) Inventors:
- **CHEUNG, Tak, Wai**
  **Bridgewater, NJ 08507 (US)**
- **SMIALOWICZ, Dennis, Thomas**
  **Waldwick, NJ 07463 (US)**
- **RYPKEMA, Ralph, Edward**
  **Lodi, NJ 07644 (US)**
- **MEHTA, Minaxi, Hemansu**
  **Fairlawn, NJ 07410 (US)**

(74) Representative: **McKnight, John Crawford et al**
**Reckitt Benckiser plc**
**Group Patents Department**
**Dansom Lane**
**Hull, East Riding Yorks. HU8 7DS (GB)**

(56) References cited:
**WO-A-96/06153**
**WO-A-97/06230**
**DE-A- 19 537 782**
**US-A- 5 591 708**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 034 245 B1

## Description

The present invention relates to disinfectant compositions. More particularly the present invention relates to concentrated liquid disinfectant compositions which are normally diluted in a larger volume of water to form a working solution therefrom, and which exhibit a blooming effect when diluted.

Blooming is a property exhibited by dilutable compositions such as known cleaning compositions, specifically pine-oil type cleaning compositions which contain a significant amount (generally at least about 5% and more) of pine oil. Certain phenolic disinfectant compounds, such as LYSOL disinfectant concentrate (Reckitt & Colman, Inc., Montvale NJ) also exhibit such a blooming property. Blooming may be characterized as the formation of milky, creamy or cloudy appearance which is manifested when a dilutable composition is added to a larger volume or quantity of water. Blooming is an Important characteristic from a consumer standpoint, as it is perceived to be an indicator of efficacy.

According to a first aspect of the invention there is provided an aqueous concentrated liquid disinfectant composition which blooms when added to a larger volume of water which comprises the following constituents:

pine oil constituent;
germicidal cationic surfactant, preferably a quaternary ammonium compound
having germicidal properties;
an additional organic solvent constituent;
binary co-solvent system comprising alkyl diphenyl solvent and a co-solvent in addition to the above solvent constituents;
optionally but desirably at least one optional constituent selected from: chelating agents, coloring agent, light stabilizers, fragrances, thickening agents, hydrotropes, pH adjusting agents, pH buffers one or more detersive surfactant constituents, particularly non-ionic and amphoteric surfactants. The one or more optional constituents are selected to not undesirably affect the overall blooming characteristics of the present inventive compositions.

According to a second aspect of the invention there is provided aqueous concentrated liquid hard surface cleaning composition which blooms when added to a larger volume of water which comprises the following constituents:

pine oil constituent;
an additional organic solvent constituent;
binary co-solvent system comprising an alkyl diphenyl solvent and a co-solvent in addition to the above solvent constituents;
an amine oxide surfactant constituent;
optionally but desirably at least one optional constituent selected from: chelating agents, coloring agents, light stabilizers, fragrances, thickening agents, hydrotropes, pH adjusting agents, pH buffers one or more detersive surfactant constituents, particularly non-ionic and amphoteric surfactants. The one or more optional constituents are selected to not undesirably affect the overall blooming characteristics of the present inventive compositions.

According to a third aspect of the invention there is an aqueous concentrated liquid disinfectant composition which blooms when added to a larger volume of water which comprises the following constituents:

a terpene based solvent;
germicidal cationic surfactant, preferably a quaternary ammonium compound
having germicidal properties;
an additional organic solvent constituent;
a binary co-solvent system comprising alkyl diphenyl solvent and a co-solvent in addition to the above solvent constituents;
one or more nonionic surfactants;
optionally but desirably at least one optional constituent selected from: chelating agents, coloring agents, light stabilizers, fragrances, thickening agents, hydrotropes, pH adjusting agents, pH buffers one or more detersive surfactant constituents, particularly non-ionic and amphoteric surfactants, as well as others known the art and useful in similar compositions; and,
the balance being water.

In preferred embodiments of the third aspect of the invention, the terpene based solvent constituent is present with respect to the alkyl diphenyl-solvent in a respective weight ratio of from 8:1 to 1:2, with the total amount of these combined constituents not exceeding 9%wt. of the total weight of the concentrate compositions. This third inventive aspect demonstrates compositions with good blooming characteristics, but with relatively reduced amounts of pine oil

or terpene based solvent.

Processes for the cleaning and/or disinfecting of hard surfaces using any of the inventive compositions taught herein are also contemplated to form part of the invention.

In preferred embodiments the concentrate compositions provide excellent initial blooming characteristics in 'as mixed' dilutions with water, but also exhibit good retention of blooming characteristics over a longer time period, viz., days and weeks.

It is a still further object of the invention to provide such a concentrated liquid disinfectant composition, such as according to the first aspect of the invention, which In a diluted form provides disinfection of surfaces wherein the presence of gram positive type pathogenic bacteria such as *Staphylococcus aureus,* and/or the presence of gram negative type pathogenic bacteria such as *Escherichia coil* and/or *Pseudomonas* aeruginosa is suspected.

<u>Terpene based solvent</u>

The terpene based solvent constituent, includes one or more further terpene based solvents. These terpene based solvents preferably contain mono- and bicyclic monoterpenes, i.e., those of the hydrocarbon class, which include, for example, the terpinenes, terpinolenes, limonenes, pinenes and mixtures thereof. Useful terpenes include d-limonene, and the mixture of terpene hydrocarbons obtained from the essence of oranges, e.g., cold-pressed orange terpenes and orange terpene oil phase ex fruit juice, and the mixture of terpene hydrocarbons expressed from lemons and grapefruit. Numerous other terpene hydrocarbons are known to those skilled In the art and may be used to prepare the blooming type, germicidal hard surface cleaning and disinfecting compositions of the present invention; however, those as mentioned above recited which are based on d-limonene and the mixture of terpene hydrocarbons obtained from citrus fruits are the most readily available and, hence, are preferred. Of these d-limonene is the most prefererred.

These terpene containing solvent constituents-particularly useful according to the third aspect of the invention are typically supplied as technical grade materials which may be and are often formulated with small amounts, e.g., 0.1%wt. (weight percent,) of auxiliary materials such as one or more stabilizers, e.g., antioxidants such as butylated hydroxytoluene. Such auxiliary materials are included within the meaning of the term "terpene containing solvent", as employed in this specification and the accompanying claims.

The concentrate compositions of the third aspect of the invention desirably comprise a terpene based constituent which may be a pine oil constituent, or a d-limonene constituent or which may include both these materials. Pine oil is an organic solvent, and is a complex blend of oils, alcohols, acids, esters, aldehydes and other organic compounds, and may be used as part of, or all of the terpene based solvent constituent. Preferred pine oil preparations which comprise at least about 50% terpene alcohols, more desirably at least about 60% terpene alcohols.

Particularly useful d-limonene containing compositions include those described above.

The terpene containing solvent constituent may be present in the concentrate compositions according to the third aspect of the invention in amounts of from about 0.001 % by weight to up to about 20% by weight, preferably about 0.1 - 15% by weight, most preferably in amount of between 1-12% by weight.

According to certain preferred embodiments of the third aspect of the invention, the terpene solvent constituent is solely a d-limonene constituent.

According to certain preferred embodiments of the third aspect of the invention. the terpene solvent constituent is solely a pine oil constituent, especially the preferred pine oil preparations described above.

<u>Pine oil constituent</u>

The concentrate compositions of the first and second aspects of the invention comprise a pine oil constituent. This pine oil constituent may also be present In compositions according to the third aspect of the invention. Pine oil is an organic solvent, and is a complex blend of oils, alcohols, acids, esters, aldehydes and other organic compounds. These include terpenes which include a large number of related alcohols or ketones. Some important constituents include terpineol, which is one of three isomeric alcohols having the basic molecular formula C10H17OH. Useful pine oils include synthetic pine oil, and also include steam distilled and sulfate pine oils, and will generally contain a higher content of turpentine alcohols. Other Important compounds include alpha- and beta-pinene (turpentine), abietic acid (rosin), and other isoprene derivatives.

Particularly effective pine oils which are presently commercially available include those in the GLIDCO Pine Oil series, which includes grades "60", "80", "150" "SW", "350" having respectively 60%wt., 80%wt., 85%wt., 75%wt. and 100%wt of terpene alcohols, (which is sometimes referred to as alpha-terpineol) especially terpineol.

The pine oil constituent may be present in the concentrate compositions of the first and second aspects of the invention in amounts of from about 0.001 % by weight to up to about 20% by weight, preferably about 0.1-15% by weight, most preferably in amount of between 1-12 % pine oil by weight. Preferred of these are pine oil preparations which comprise at least about 50% terpene alcohols (alpha-terpineols), more desirably at least about 60% terpene

alcohols, and more preferably those which comprise at least about 80% terpene alcohols.

Germicidal cationic surfactant

The concentrate compositions according to the first and third aspects of the invention include as a necessary constituent at least one cationic surfactant which is found to provide a broad antibacterial or sanitizing function. Any cationic surfactant which satisfies these requirements may be used and are considered to be within the scope of the present invention.

Examples of preferred cationic surfactant compositions useful in the practice of the instant invention are those which provide a germicidal effect to the concentrate compositions, and especially preferred are quaternary ammonium compounds and salts thereof, which may be characterized by the general structural formula:

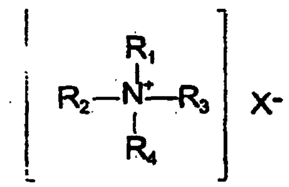

wherein at least one of $R_1$, $R_2$, $R_3$ and $R_4$ is a alkyl, aryl or alkylaryl substituent of from 6 to 26 carbon atoms, and the entire cation portion of the molecule has a molecular weight of at least 165. The alkyl substituents may be long-chain alkyl, long-chain alkoxyaryl, long-chain alkylaryl, halogen-substituted long-chain alkylaryl, long-chain alkylphenoxyalkyl, arylalkyl, etc. The remaining substituents on the nitrogen atoms other than the abovementioned alkyl substituents are hydrocarbons usually containing no more than 12 carbon atoms. The substituents $R_1$, $R_2$, $R_3$ and $R_4$ may be straight-chained or may be branched, but are preferably straight-chained, and may include one or more amide, ether or ester linkages. The counterion X may be any salt-forming anion which permits water solubility of the quaternary ammonium complex.

Exemplary quaternary ammonium salts within the above desaiptioiri include the alkyl ammonium halides such as cetyl trimethyl ammonium bromide, alkyl aryl ammonium halides such as octadecyl dimethyl benzyl ammonium bromide, N-alkyl pyridinium halides such as N-cetyl pyridinium bromide, and the like. Other suitable types of quaternary ammonium salts include those in which the molecule contains either amide, ether or ester linkages such as octyl phenoxy ethoxy ethyl dimethyl benzyl ammonium chloride, N-(laurylcocoaminoformylmethyl)-pyridinium chloride, and the like. Other very effective types of quaternary ammonium compounds which are useful as germicides include those in which the hydrophobic radical is characterized by a substituted aromatic nucleus as in the case of lauryloxyphenyltrimethyl ammonium chloride, cetylamiriophenyltrimethyt ammonium methosulfate, dodecylphenyltrimethyl ammonium methosulfate. dodecylbenzyltrimethyl ammonium chloride, chlorinated dodecylbenzyltrimethyl ammonium chloride, and the like.

Preferred quaternary ammonium compounds which act as germicides and which are be found useful in the practice of the present invention include those which have the structural formula:

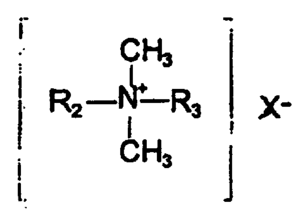

wherein $R_2$ and $R_3$ are the same or different $C_8$-$C_{12}$alkyl, or $R_2$ is $C_{12-16}$alkyl, $C_{8-18}$alkylethoxy, $C_{8-18}$alkylphenolethoxy when $R_3$ is benzyl, and X is a halide, for example chloride, bromide or iodide, or is a methosulfate anion. The alkyl groups recited in $R_2$ and $R_3$ may be straight-chained or branched, but are preferably substantially linear.

Particularly useful quaternary germicides include compositions which include a single quaternary compound, as well as mixtures of two or more different quaternary compounds, such as blends of alkyl dimethyl benzyl ammonium chlorides. Exemplary useful quaternary ammonium compounds include those available under the tradenames BARDAC, BARQUAT, HYAMINE, LONZABAC (ex. Lonza Inc., or Stepan Co.)

The germicidal cationic surfactant, especially the preferred quaternary ammonium salts described above may be present in any gennicidally effective concentration. Advantageously, the germicidal cationic surfactant, when present, may be present in the concentrate compositions in amounts of from about 0.001 % by weight to up to about 15% by weight, preferably about 0.01-10% by weight, most preferably in amount of between about 0.5 - 8 % by weight.

Organic Solvent constituent

A further constituent according to the invention is an organic solvent. This organic solvent, which is present in addition to the pine oil (which is itself known to be an organic solvent) assists in improves the dispersabiiity and/or miscibility of the water insoluble pine oil in water. The organic solvent may also improve the miscibility of further constituents according to the present invention; including any-water insoluble or poorly soluble constituents. Many useful organic solvents which are known to be useful in dispersing pine oil in water may be used; virtually any may be used as long as it does not undesirably disrupt the favorable characteristics of the invention, especially the blooming characteristic. Mixtures of two or more organic solvents may also be used as the organic solvent constituent.

Useful organic solvents are those which are at least partially water-miscible such as alcohols, water-miscible ethers (e.g. diethylene glycol diethylether, diethylene glycol dimethylether, propylene glycol dimethylether), water-miscible glycol ether (e.g. propylene glycol monomethylether, propylene glycol mono ethylether, propylene glycol monopropylether, propylene glycol monobutylether, ethylene glycol monobutylether, dipropylene glycol monomethylether, diethyleneglycol monobutylether), lower esters of monoalkytethers of ethyleneglycol or propylene glycol (e.g. propylene glycol monomethyl ether acetate) These materials are all commercially available (ex. Union Carbide, Dow, or Hoechst) Mixtures of organic solvents can also be used.

Particularly useful organic solvents Include glycols such as alkylene glycols such as propylene glycol, and glycol ethers. Examples of such glycol ethers include those having the general structure R'-O-R"-OH, wherein R' is an alky of 1 to 20 carbon atoms, or is aryl, or is alkaryl of at least 6 carbon atoms, and R" is an ether condensate of propylene glycol and/or ethylene glycol having from one to ten glycol monomer units. Examples of such useful glycol ethers include propylene glycol methyl ether, dipropylene glycol methyl ether, tripropylene glycol methyl ether, propylene glycol isobutyl ether. ethylene glycol methyl ether, ethylene glycol ethyl ether, ethylene glycol butyl ether, diethylene glycol phenyl ether, propylene glycol phenol ether, and mixtures thereof. Preferred are ethylene glycol n-butyl ether, diethylene glycol n-butyl ether, and mixtures thereof. Such glycol ethers are presently commercially available from a number of sources including in the DOWANOL™ glycol ethers (ex. Dow Chemical Co.).

Further particularly useful organic solvents monohydric (straight chained or branched) primary, secondary or tertiary lower aliphatic alcohols, especially $C_1$-$C_6$ aliphatic primary and secondary alcohols, of which isopropanol is particularly preferred.

It has generally been found the addition of only a minimum effective amount which is found to be effective in dispersing or solubilizing the pine oil constituent and any other aqueous insoluble or poorly soluble constituents in the concentrate compositions is desirably used. Such is due to desire to reduce the amount of volatile organic constituents in the concentrate compositions of the invention, which volatile organic constituents are desirably minimized from an environmental standpoint. The present inventors have found that inclusion of the organic solvent constituent in amounts of about 0.001% by weight to about 50% by weight have been found to be effective to solubilize the pine oil, as well as in solubilizing other less water soluble constituents present in the concentrate compositions of the invention. Preferably, the organic solvent constituent is present in the concentrate compositions of the Invention In amounts of from 0.1 - 40% by weight, and most preferably from about 0.1 - 35% by weight.

Additionally the inventor has found the according to certain preferred embodiments the organic solvent constituent, comprises, and in certain especially preferred embodiments consist essentially of, both an alkylene glycol such as propylene glycol, and a monohydric lower aliphatic alcohol such as a $C_1$-$C_8$ aliphatic primary and secondary alcohol, especially isopropyl alcohol.

Binary co-solvent system

The inventive compositions further also include a binary co-solvent system comprising alkyl diphenyl solvent and a co-solvent which aids in the solubilization of the diphenyl solvent In an aqueous medium.

The alkyl diphenyl solvent is one which may be generally represented by the formula

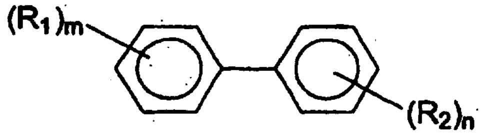

wherein:

$R_1$ is hydrogen or is a lower alkyl radical, preferably a $C_1$-$C_{10}$, but more preferably is a $C_1$-$C_6$ straight chained or branched alkyl radical,
$R_2$ is a lower alkyl radical, preferably a $C_1$-$C_{10}$, but more preferably is a $C_1$-$C_6$ straight chained or branched alkyl radical,
m is an integer from 1-3 inclusive; and,
n is an integer from 1 - 3 inclusive.

Preferably $R_1$ is hydrogen, m is 1, and $R_2$ has any of the values indicated above. More preferably, $R_1$ is hydrogen, m is 1, and $R_2$ is a $C_1$-$C_6$ straight chained or branched alkyl radical. It is to be understood that mixtures of the compounds indicated above may be used as the biphenyl solvent constituent

Such alkyl diphenyls are, per se, known to the art, and are described in US 3787181. Particularly useful as the alkyl diphenyl solvent are materials presently marketed as NUSOLV ABP solvents (Ridge Technologies Inc., Ridgewood NJ) described to be a high purity alkyl diphenyls and mixtures thereof, and is also available from Koch Chemical Co. (Corpus Christi, TX).

The alkyl diphenyl solvent may be present in the concentrate compositions in amounts of from about 0.001 % by weight to up to about 7% by weight, preferably about 0.01-5 % by weight, most preferably in amount of between 0.1-2 % by weight.

The inventors have observed that the concentrated compositions of the invention are greatly improved with the addition of a co-solvent. This co-solvent aids in the solubilization of the alkyl diphenyl solvent in water is desirably an at least partially water-miscible monohydric linear primary alcohol, especially a water-miscible monohydric primary $C_8$-$C_{18}$ alcohol, or is benzyl alcohol. Particularly effective are cetyl, lauryl and myristyl alcohols, and benzyl alcohol. The inventors have found that the Inclusion of such alcohols greatly aids in the dissolution of the alkyl diphenyl solvents in the concentrate compositions according to the invention being described herein, which aids in ensuring that clarity of the concentrate composition is maintained which is particularly desirable from a consumer standpoint.

The co-solvent may be present In the concentrate compositions in amounts of from about 0.001 % by weight to up to about 5% by weight, preferably about 0.01-3% by weight, most preferably in amount of between 0.1-2% by weight.

Desirably, the binary co-solvent system comprising the alkyl diphenyl solvent and a co-solvent are present in amounts of from 0.001-12%wt, more preferably from 0.1-12%wt.

Alternately, it is contemplated that the preferred co-solvent described above may be substituted in whole or in part by one or more nonionic or amphoteric surfactants which are also shown to aid in the dissolution of the alkyl diphenyl solvent in water. Such one or more nonionic or amphoteric surfactants include those described below.

Amine oxide surfactant

Compositions according to the second aspect of the invention include one or more amine oxide surfactants. Such amine oxides desirably improve the miscibility of the pine oil constituents in the aqueous phase of the concentrate compositions. Nonlimiting examples of useful amine oxide semi-polar nonionic surfactants include those according to either of the formulae:

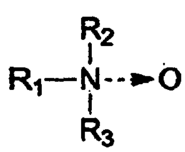

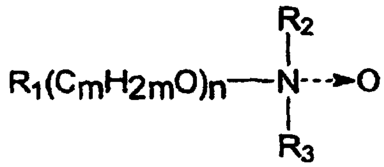

wherein $R_1$ is hydrogen or is an alkyl, 2-hydroxyalkyl. 3-hydroxyalkyl, or 3-alkoxy-2-hydroxypropyl radical where the alkyl and alkoxy parts contain from about 8 to about 18 carbon atoms, $R_2$ and $R_3$ are independently selected from methyl, ethyl, propyl, isopropyl, 2-hydroxyethyl, 2-hydroxypropyl, or 3-hydroxypropyl, m is an integer from 2 to 4, and n is an Integer from 0 to about 10. Preferably, the amine oxide semi-polar nonionic surfactants are those according to the formula immediately preceding wherein $R_1$ is an alkyl radical of from 12 to 16 carbon atoms, $R_2$ and $R_3$ are independently selected from methyl or ethyl, m is 2, and n is 0. Specific examples of such useful amine oxide semi-polar nonionic surfactants include cetyl-, myristyl- or lauryl- dimethyl amine oxide or mixtures thereof.

A further useful general class of useful amine oxides which may be included in the amine oxide constituent according to the Invention are further alkyl di (lower alkyl) amine oxides in which the alkyl group has about 10-20, and preferably 12-16 carbon atoms, and can be straight or branched chain, saturated or unsaturated. The lower alkyl groups include between 1 and 7 carbon atoms. Examples include those described above, as well as those in which the alkyl group is a mixture of different amine oxides, dimethyl cocoamine oxides, dimethyl (hydrogenated tallow) amine oxides, and myristyl/palmityl dimethyl amine oxides.

A further class of useful amine oxides include alkyl di (hydroxy lower alkyl) amine oxides in which the alkyl group has about 10-20, and preferably 12-16 carbon atoms, and can be straight or branched chain, saturated or unsaturated. Examples are bis(2-hydroxyethyl) cocoamine oxide, bis(2-hydroxyethyl) tallowamine oxide; and bis(2-hydroxyethyl) stearylamine oxide.

Further useful amine oxides include those which may be characterized as alkylamidopropyl di(lower alkyl) amine oxides In which the alkyl group has about 10-20, and preferably 12-16 carbon atoms, and can be straight or branched chain, saturated or unsaturated. Examples are cocoamidopropyl dimethyl amine oxide and tallowamidopropyl dimethyl amine oxide; and

Additional useful amine oxides include those which may be referred to as alkylmorpholine oxides in which the alkyl group has about 10-20, and preferably 12-16 carbon atoms, and can be straight or branched chain, saturated or unsaturated.

Exemplary amine oxide surfactant constituents include AO-728 which is described to be a composition containing 50%wt of bis-(2-hydroxyethyl $C_{12}$-$C_{15}$ alkyloxypropyl) amine oxide (ex. Tomah Products Inc., Milton WI), and AMMONYX CDO Special described to be cocoamidopropyl dimethyl amine (ex. Stepan Co., Northfield IL).

The amine oxide constituent is present in the second aspect of the inventive concentrate compositions in amounts of up to 30 %wt., preferably in amounts of from 0.1 - 30%wt. and stilt more preferably in amounts of from 1 - 20%wt., based on the total weight of the concentrate composition. Particularly preferred amounts are demonstrated in the Examples.

It is to be understood that both the at least partially water miscible monohydric primary alcohol and an amine oxide may each be present in the concentrate compositions, and according to certain preferred embodiments of the invention both are present.

It is to be understood that the amine oxide, required according to the second aspect of the invention may be included in the first aspect of the iriventon as an optional constituent.

<u>Nonionic surfactants</u>

According to the third aspect of the invention, there are present one or more nonionic surfactants. These nonionic surfactants may however, be included as one or more of the optional detersive surfactants according to the first and second aspects of the invention.

Practically any hydrophobic compound having a carboxy, hydroxy, amido, or amino group with a free hydrogen attached to the nitrogen can be condensed with ethylene oxide or with the polyhydration product thereof, polyethylene glycol, to form a water soluble nonionic surfactant compound. Further, the length of the polyethylenoxy hydrophobic and hydrophilic elements may various. Exemplary nonionic compounds include the polyoxyethylene ethers of alkyl aromatic hydroxy compounds, e.g., alkylated polyoxyethylene phenols, polyoxyethylene ethers of long chain aliphatic alcohols, the polyoxyethylene ethers of hydrophobic propylene oxide polymers, and the higher alkyl amine oxides.

To be mentioned as particularly useful nonionic surfactants are alkoxylated linear primary and secondary

alcohols such as those commercially available under the tradenames PolyTergent® SL series (Olin Chemical Co., Stamford CT), Neodol® series (Shell Chemical Co., Houston TX), Genapol series (Clariant Corp., Charlotte, NC); as well as alkoxylated alkyl phenols including those commercially available under the tradename Triton® X series (Union Carbide Chem. Co., Danbury CT). Further exemplary useful nonionic surfactants which may be used include alkanolamides including monoethanolamides and diethanolamides, particularly fatty monoalkanolamides and fatty dialkanolamides. Further exemplary nonionic surfactants which may be used include certain alkanolamides including monoethanolamides and diethanolamides, particularly fatty monoalkanolamides and fatty dialkanolamides.

A class of particularly useful nonionic surfactants are those based on alkoxylated, especially ethoxylated, glyceryl esters. Such compounds are known and commercially available. Examples of such materials include alkoxylated glyceryl cocoates, alkoxyalted glyceryl tallowates. may of which are available under the tradename VARONIC (Witco Chem. Co., Greenwich CT.) Particularly useful is VARONIC LI-63 which is described to be an alkoxylated glyceryl cocoate which exhibits a hydrophilic/lipophilic balance ('HLB') value of about 15.9.

A further class of particularly useful nonionic surfactants are those based on linear primary alcohol ethoxylates, especially one or those presently commercially available in the GENAPOL series of surfactants (ex. Clariant Corp., Muttenz, Switzerland)

Nonionic surfactant compositions based on amine oxides described previously are useful in compositions according to the third aspect of the inventive compositions. Most desirably the nonionic surfactant is a mixture of linear primary alcohol ethoxylates and surfactants based on based on alkoxylated, especially ethoxylated, glyceryl esters wherein the amount of the former surfactant exceeds the latter surfactant, and more desirably wherein at least twice of much of the former surfactant is present relative to the latter. Particularly preferred nonionic surfactants, and particularly preferred relative weight ratios are demonstrated by one or more of the Examples.

The nonionic surfactant is desirably present in amounts of from about 0.001-12%wt., more preferably in amounts of from about 1-10%wt., and most preferably in amounts of from about 5-10%wt. in compositions according to the third aspect of the invention.

It is to be understood that these nonionic surfactants may be included as optional constituents according to the first and second aspects of the invention.

Water

Water is added in order to provide 100% by weight of the concentrate composition. Water is added in amounts which are sufficient to form the concentrated compositions which amount is sufficient to ensure the retention of a substantially dear characteristic when produced as a concentrate, but at the same time ensuring good blooming upon the addition of the concentrated composition to a further amount of water, or upon the addition of further water to the concentrate. The water may be tap water, but Is preferably distilled and/or deionized water.

Optional Constituents

The inventive compositions may include one or more further optional constituents. By way of non-limiting examples, these Include chelating agents, coloring agents, light stabilizers, fragrances, thickening agents, hydrotropes, pH adjusting agents, pH buffers one or more detersive surfactant constituents particularly non-ionic and amphoteric surfactants. Generally the total weight of such further conventional additives may comprise up to 20% by weight of a concentrated composition formulation.

Further optional, but advantageously included constituents are one or more coloring agents which find use In modifying the appearance of the concentrate compositions and enhance their appearance from the perspective of a consumer or other end user. Known coloring agents, such as a color ranging from colorless to a deep amber, deep amber yellow or deep amber reddish color. Such a coloring agent or coloring agents may be added in any useful amount in a conventional fashion, i.e., admixing to a concentrate composition or blending with other constituents used to form a concentrate composition. However, other colors atypical of pine oil type cleaning concentrates may be used as well. Known art light stabilizer constituents, such as stilbene derivatives, may also be added, particularly wherein coloring agents are used in a composition. As is known to the art, such light stabilizers act to retain the appearance characteristics of the concentrate compositions over longer intervals of time.

Exemplary useful buffers include the alkali metal phosphates, polyphospates, pyrophosphates, triphosphates, tetraphosphates, silicates, metasilicates, polysilicates, carbonates, hydroxides, and mixtures of the same. Certain salts, such as the alkaline earth phosphates, carbonates, hydroxides, can also function as buffers. It may also be suitable to use buffers such materials as aluminosilicates (zeolites), borates, aluminates and certain organic materials such as gluconatese, succinates, maleates, and their alkali metal salts. Such buffers keep-the pH ranges of the compositions of the present invention within acceptable limits.

Exemplary useful pH adjusting agents include known materials which tray be used to adjust the pH of the

concentrate compositions to a desired range.

The useful optional nonionic surfactants, include known art nonionic surfactant compounds, including those described previously. Practically any hydrophobic compound having a carboxy, hydroxy, amido, or amino group with a free hydrogen attached to the nitrogen can be condensed with ethylene oxide or with the polyhydration product thereof, such as polyethylene glycol, to form a water soluble nonionic surfactant compound. Further, the length of the polyethylenoxy hydrophobic and hydrophilic elements may various. Exemplary nonionic compounds include the polyoxyethylene ethers of alkyl aromatic hydroxy compounds, e.g., alkylated polyoxyethylene phenols, polyoxyethylene ethers of long chain aliphatic alcohols, the polyoxyethylene ethers of hydrophobic propylene oxide polymers, and the higher alkyl amine oxides.

Further exemplary useful nonionic surfactants which may be used include certain alkanolamides-including monoethanolamides and diethanolamides, particularly fatty monoalkanolamides and fatty dialkanolamides. Commercially available monoethanol amides and diethanol amides include those marketed under the trade names ALKAMIDE and CYCLOMIDE by Rhône-Poulenc Co., (Cranbury, NJ).

Exemplary nonionic surfactants include certain ethoxylates presently commercially available under the trade name GENAPOL (ex. Clariant Co., Muttenz, Switzerland) which are linear alcohol ethoxylates, as well as NEODOL (Shell Chemical Co., Houston, TX(USA)), which are ethoxylated higher aliphatic, primary ethoxylates. Further useful nonionic surfactant compositions include the condensation products of a secondary aliphatic alcohols containing 8 to 18 carbon atoms in a straight or branched chain configuration condensed with 5 to 30 moles of ethylene oxide. Such are commercially available as TERGITOL surfactants.(Union Carbide Co., Danbury. CT(USA)).

Other suitable nonionic surfactant compositions include the polyethylene oxide condensates of one mole of alkyl phenol containing from about 8 to 18 carbon atoms in a straight- or branched chain alkyl group with about 5 to 30 moles of ethylene oxide, including those which are presently commercially available under the trade name of IGEPAL (Rhône-Poulenc, Princeton NJ(USA)). Further useful nonionic, surfactants include the water-soluble condensation products of a $C_8$-$C_{20}$ alkanol with a mixture of ethylene oxide and propylene oxide wherein the weight ratio or ethylene oxide to propylene oxide is from 2.5:1 to 4:1, preferably 2.89:1 to 3.3:1, with the total of the ethylene oxide; and propylene oxide (including the terminal ethanol or proponol group) being from 60-85%, preferably 70 to 80%, by weight. Such include those commercially available under the trade name of PLURAFAC (BASF Corp., Hackettstown, NJ (USA)). Still further useful water-soluble nonionic surfactants include condensation products of a $C_8$-$C_{20}$ alkanols with a mixture of ethylene oxide and/or propylene oxide. Such are commerically available under the tradename POLYTERGENT (Olin Chemical Co., Stamford CT(USA)).

Further suitable water-soluble nonionic surfactants which may also be used include those which are marketed under the trade name PLURONICS(BASF Corp., Mt. Olive Township, NJ (USA)). These are formed by condensing ethylene oxide with a hydrophobic base-formed by the condensation of propylene oxide with-propylene glycol. Further useful nonionic surfactants include alkylmonoglyocosides and alkylpolyglycosides which are alkaline and electrolyte stable. Such are prepared generally by reacting a monosaccharide, or a compound hydrolyzable to a monosaccharide with an alcohol such as a fatty alcohol in an add medium. Various glycoside and polyglycoside compounds including alkoxylated glycosides may be used. An exemplary useful polyglycoside is one according to the formula:

$$R_2O—(C_nH_2nO)r—(Z)_x$$

where Z is derived from glucose, R is a hydrophobic group selected from alkyl groups, alkylphenyl groups, hydroxyalkylphenyl groups as well as mixtures thereof, wherein the alkyl groups may be straight chained or branched, which contain from about 8 to about 18 carbon atoms, n is 2 or 3, r is an integer from 0 to 10, but is preferably 0, and x is a value from about 1 to 8, preferably from about 1.5 to 5. Preferably the alkylpolyglycosides are nonionic fatty alkylpolyglucosides which contain a straight chain or branched chain $C_8$ -$C_{15}$ alkyl group, and have an average of from about 1 to about 5 glucose units per fatty alkylpolyglucoside molecule. More preferably, the nonionic fatty alkylpolyglucosides which contain straight chain or branched $C_8$ -$C_{15}$ alkyl group, and have an average of from about 1 to about 2 glucose units per fatty alkylpolyglucoside molecule.

A further exemplary group of alkyl glycoside surfactants suitable for use in the practice of this invention may be represented by formula I below:

$$RO—(R_1O)_y\text{-}(G)_xZ_b$$

wherein: R is a monovalent organic radical containing from about 6 to about 30, preferably from about 8 to about 18 carbon atoms; $R_1$ is a divalent hydrocarbon radical containing from about 2 to about 4 carbon atoms; 0 is an oxygen atom;

y is a number which has an average value from about 0 to about 1 and is preferably 0; G is a moiety derived from a reducing saccharide containing 5 or 6 carbon atoms; and x is a number having an average value from about 1 to 5 (preferably from 1.1 to 2);
Z is $O_2M^1$,

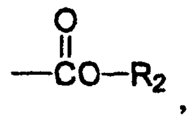

$O(CH_2)$, $CO_2M^1$, $OSO_3M^1$, or $O(CH_2)SO_3M^1$; $R_2$ is $(CH_2)CO_2M^1$ or $CH=CHCO_2M^1$; (with the proviso that Z can be $O_2M^1$ only if Z is in place of a primary hydroxyl group in which the primary hydroxyl-bearing carbon atom, $—Ch_2OH_2$ is oxidized to form a

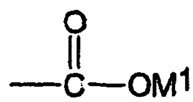

group); b is a number of from 0 to 3x+1 preferably an average of from 0.5 to 2 per glycosal group; p is 1 to 10, $M^1$ is $H^+$ or an organic or inorganic counterion, particularly cations such as; for example, an alkali metal cation, ammonium cation, monoethanolamine cation, or calcium cation.

As defined in Formula I above, R is generally the residue of a fatty alcohol having from about 8 to 30 and preferably 8 to 18 carbon atoms. Examples of such alkylglycosides as described above include, for example. APG™ 325 CS Glycoside® 'which'is described as being a 50% $C_9$-$C_{11}$ alkyl polyglycoside, also commonly referred to as D-glucopyranoside, (commercially available from Henkel Corp. Ambler PA) and Glucopon™ 625 CS which is described as being a 50% $C_{10}$-$C_{16}$ alkyl polyglycoside, also commonly referred to as a D-glucopyranoside, (available from Henkel Corp., Ambler PA).

The nonionic surfactants, when present, can be present either singly, or as a mixture of two or more nonionic surfactant compounds as defined above.

As further useful optional constituent, the inventive compositions may also include one or more further known art surfactant compositions, including betaines, ethylene oxide condensates, fatty acid amides, and amine oxide semi-polar nonionic surfactants.

Exemplary useful betaine surfactants include those according to the general formula:

$$R-\overset{(+)}{N}(R_1)_2-R_2\overset{(-)}{COO}$$

wherein R is a hydrophobic group selected from the group consisting of alkyl groups containing from about 10 to about 22 carbon atoms, preferably from about 12 to about 18 carbon atoms, alkyl aryl and aryl alkyl groups containing a similar number of carbon atoms with a benzene ring being treated as equivalent to about 2 carbon atoms, and similar structures interrupted by amido or ether linkages; each $R_1$ is an alkyl group containing from 1 to about 3 carbon atoms; and $R_2$ is an alkylene group containing from 1 to about 6 carbon atoms,

Examples of preferred betaines are dodecyl dimethyl betaine, cetyl dimethyl betaine, dodecyl amidopropyldimethyl betaine, tetradecyldimethyl betaine, tetradecylamidopropyldimethyl betaine, and dodecyldimethylammonium hexanoate.

Useful fatty add amides include those which are known to the art Particular exemplary fatty acid amide surfactants include ammonia, monoethanol, and diethanol amides of fatty adds having an acyl moiety which contains from about 8 to about 18 carbon atoms, and which may be represented in accordance with the formula:

$$R_1—CO—N(H)_{m-1}(R_2OH)_{3-m}$$

where $R_1$ represents a saturated or unsaturated aliphatic hydrocarbon radical of from about 7 to 21 carbon atoms, but

preferably from about 11 to 17 carbon atoms; $R_2$ represents a $-CH_2-$ or $-CH_2CH_2-$, and m is an integer from 1 to 3, but Is preferably 1. Preferably, $R_1$ is a saturated or unsaturated aliphatic hydrocarbon radical comprising from about 11 to 17 carbon atoms, and m is 1.

Further examples of such compounds include mono-ethanol amine coconut fatty acid amide and diethanol amine dodecyl fatty add amide. An exemplary useful fatty acid amide includes cocomonoethanol amide or cocodiethanolamide, which are presently commerdally available as MONAMID CMA or MONAMID MDNA (both front Mona Industries, Paterson NJ (USA)).

It is also to be understood, that proportions of one or more constituents have been and generally are referred to as percent by weight or as parts by weight based on a measure of 100 % by weight, unless otherwise Indicated.

According to certain particularly preferred embodiments of the first aspect of the invention there are provided aqueous concentrated liquid compositions which comprise (or preferably, consist essentially of) the following constituents:

According to certain particularly preferred embodiments of the first aspect of the invention there are provided aqueous concentrated liquid disinfectant compositions which comprise (or preferably, consist essentially of) the following constituents:

1 - 12 %wt. of pine oil constituent, preferably having at least 60% terpene alcohols;
0.5 - 8 %wt. of a germicidal cationic surfactant, preferably a quaternary ammonium compound having germicidal properties;
0.1-35%Wt of an additional organic solvent constituent, preferably both an alkylene glycol and a monohydric lower aliphatic alcohol
0.2 - 4 %wt. of a binary co-solvent system comprising an alkyl diphenyl solvent and a co-solvent in addition to the above solvent constituents
0-20 %wt of at least one optional constituent as described above; and, to 100 %wt. water.

Certain particularly preferred embodiments of the first aspect of the invention are disclosed on Table 1.1 of the Examples.

According to certain particularly preferred embodiments of the second aspect of the invention there are provided aqueous concentrated liquid hard surface cleaning composition which comprise (or preferably, consist essentially of) the following constituents:

1-12%wt. of pine oil constituent, preferably having at least 60% terpene alcohols;
0.1-35%wt. of an additional organic solvent constituent;
0.1-12%wt. of a binary co-solvent system comprising alkyl diphenyl solvent and a co-solvent in additional to the above solvent constituents
1-20 %wt. of an amine oxide surfactant constituent;
0 - 20 %wt. of at least one optional constituent as described above; and, to 100 %wt. water.

Certain particularly preferred embodiments of the second aspect of the invention are disclosed on Table 1.2 of the Examples

According to certain particularly preferred embodiments of the third aspect of the invention there are provided aqueous concentrated liquid disinfectant composition which comprise (or preferably, consist essentially of) the following constituents:

1-12%wt. terpene solvent containing constituent;
0.5-8%wt. germicidal cationic suffactant, preferably a quaternary ammonium compound having germicidal properties;
0.1-15%wt of an additional organic solvent constituent;
1-12%wt. binary co-solvent system comprising alkyl diphenyl solvent and a co-solvent in addition to the above solvent constituents
1-20%wt. one more nonionic surfactants;
0-20 %wt. of at least one optional constituent as described above; and, to 100%wt of water.

Certain particularly preferred embodiments of the third aspect of the invention are disclosed on Table 1.3 of the Examples

The concentrated compositions of the first, second or third aspect of the invention as taught herein may be used without dilution, i.e., in concentrate:water concentrations of 1:0, to extremely dilute dilutions such as 1:10,000. Desirably, the concentrate is diluted in the range of 1:0.1 -1:1000, preferably in the range of 1:1-1:500 but most preferably in the range of 1:10 - 1:100.- The actual dilution selected is in part determinable by the degree and amount of dirt and grime to be removed from a surface(s), the amount of mechanical force imparted to remove the same, as well as the observed efficacy of a particular dilution.

In accordance with preferred embodiments of the invention, when a quantity of the concentrate compositions taught herein are added to a larger volume of water, a blooming characteristic is manifested. Such "blooming" may be broadly characterized as the formation of milky, creamy or cloudy appearance which is manifested when a dilutable composition is added to a larger volume or quantity of water. Such "blooming" may be alternately characterized as the reduction of transmitted light through an amount of water by at least 30%, desirably by at least 40%, yet more desirably by at least about 50%, and yet most desirably by at least 60% or more when a dilution of the concentrate composition: water with the weight or volume ratio range of from 1:64-102 is formed, wherein the dilution is at 20°C (68°F). That such blooming may be attained without the use of pine oil fractions as is common in certain commercially available pine oil containing preparations is surprising.

As has been noted, concentrate compositions according to preferred embodiments of the invention exhibit a long lasting blooming effect when they are diluted into a larger volume of water, especially when used to form (weight ratio) dilutions with water of concentrate:water of 1:64 at room temperature. Desirably, such dilutions do not exhibit an increase in light transmittance in accordance with the measurement methods discussed in the Examples below, of more than 50% (based on the initial 'as mixed' value) during its initial three-day interval.

The concentrate compositions taught herein, and dilutions formed therefrom are useful in the cleaning and/or sanitization of hard surfaces.

In preferred embodiments of the first aspect of the invention, aqueous dilutions of the concentrated aqueous liquid disinfectant compositions exhibit antimicrobial efficacy against at least one of the following bacteria: *Staphylococcus aureus*, *Escherichia coli., Pseudomonas aeruginosa,* where the ratio of concentrate composition:water is 1:64 to 1:102. According to more preferred embodiments the compositions exhibit efficacy against at least two of the following bacteria: *Staphylococcus aureus, Escherichia coli.*, *Pseudomonas aeruginosa,* where the ratio of concentrate composition:water of 1:64 to 1:102. Such aqueous dilutions may be classified as "broad spectrum disinfectant" compositions. According to a still more preferred embodiment, aqueous dilutions of the concentrated aqueous liquid disinfectant compositions of the first aspect of the invention exhibit antimicrobial efficacy against all three of the following bacteria: *Staphylococcus aureus*, *Escherichia coli*, *Pseudomonas aeruginosa*, where the ratio of concentrate composition: water of 1:64 to 1:102. Such aqueous dilutions may be classified as "hospital strength disinfectant" compositions. In each of these respective preferred, more preferred and still more preferred embodiments described immediately above, those which exhibit antimicrobial efficacy at greater aqueous dilutions of the concentrated aqueous liquid disinfectant compositions in water, such as at concentrate water dilution ratios of 1:102, are preferred over concentrate:water dilution ratios of 1:85; and still more preferred over concentrate:water dilution ratios of 1:64.

Such dilution ratios of concentrate:water as described above may be volume/volume basis, or a weight/weight basis.

The following examples below illustrate exemplary and among them preferred formulations of the compositions according to the first and second aspects of the invention.

## Examples

A number of formulations were produced by mixing the constituents outlined on Tables 1.1, Table 2.1 and 3.1 by adding the individual constituents into a beaker of deionized water at room temperature which was stirred with a conventional magnetic stirring rod. The order of addition is not critical, but good results are obtained where the surfactants are added to the water prior to Stirring continued until the formulation was homogenous in appearance. It is to be noted that the constituents might be added in any order, but It is preferred that water be the initial constituent provided to a mixing vessel or apparatus as it is the major constituent and addition of the further constituents thereto is convenient.

It is to be noted the compositions demonstrating the formulations according to the first aspect of the invention are provided on Table 1.1, those according to the second aspect of the invention are listed on Table 1.2 and those according to the third aspect of the invention are listed on Table 1.3

**TABLE 1.1**

| | Comp.1 | Ex.1.1 | Ex.1.2 | Ex.1.3 | Ex.1.4 | Ex.1.5 | Ex.1.6 | Ex.1.7 | Ex.1.8 | Ex.1.9 |
|---|---|---|---|---|---|---|---|---|---|---|
| Pine Oil 80 | 8.30 | 8.30 | 8.30 | 8.30 | 8.30 | 8.30 | 8.30 | 8.30 | 8.30 | 8.30 |
| Isopropyl alcohol | 12.00 | 12.00 | 12.00 | 9.00 | 12.00 | 12.00 | 12.00 | 12.00 | 12.00 | 12.00 |
| Na2EDTA | 0.50 | 0.50 | 0.50 | 0.50 | 0.50 | 0.50 | 0.50 | 0.50 | 0.50 | 0.50 |
| propylene glycol | 23.00 | 20.00 | 20.00 | 20.00 | 20.00 | 20.00 | 20.00 | 20.00 | 20.00 | 20.00 |
| lauryl alcohol | 1.00 | 1.00 | 1.00 | 1.00 | 1.00 | 1.00 | 1.00 | 1.00 | 1.00 | 1.00 |
| BTC-8358 (80%) | --- | 5.00 | --- | 5.00 | 5.00 | 5.00 | 5.00 | 5.00 | 5.00 | 5.00 |
| BTC-835 (50%) | 8.00 | --- | 8.00 | --- | --- | --- | --- | --- | --- | --- |
| biphenyl solvent A | --- | 1.00 | 1.00 | 1.00 | --- | --- | 0.20 | 0.40 | 0.60 | 0.80 |
| biphenyl solvent B | --- | --- | --- | --- | 1.00 | --- | --- | --- | --- | --- |
| biphenyl solvent C | --- | --- | --- | --- | --- | 1.00 | --- | --- | --- | --- |
| Colorant | 0.03 | 0.03 | 0.03 | 0.03 | 0.03 | 0.03 | 0.03 | 0.03 | 0.03 | 0.03 |
| Fragrance | 0.10 | --- | 0.10 | 0.10 | --- | --- | --- | --- | --- | --- |
| di water | q.s. | q.s. | q.s. | q.s. | q.s. | q.s. | q.s. | q.s. | q.s. | q.s. |

Pine Oil 80 was a pine oil preparation containing at least 80%wt. terpene alcohols.
BTC-8358 (80%) was n-alkyl dimethyl benzyl ammonium chloride, 80%wt. actives
BTC-835 (50%) was n-alkyl dimethyl benzyl ammonium chloride, 50%wt. actives
biphenyl solvent A was NUSOLV ABP-103 (Arristec, Inc.) is a mixture of alkyl biphenyls
biphenyl solvent B was SURE SOL 300 (Koch Chemical Co. ) is a mixture of alkyl biphenyls, specifically diisopropyl biphenyls (65%), triisopropyl biphenyls (30%) and other alkyl biphenyls (5%)
biphenyl solvent C was SURE SOL 300 (Koch Chem.Co.) is a mixture of alkyl biphenyls
Na2EDTA was the disodium salt of ethylenediaminetetraacetic acid
di water was deionized water

TABLE 1.2

| | Ex.2.1 | Ex.2.2 | Ex.2.3 | Ex.2.4 | Ex.2.5 | Ex.2.6 | Ex.2.7 |
|---|---|---|---|---|---|---|---|
| Pine Oil 80 | 8.30 | 8.30 | 4.00 | 4.00 | 4.00 | 4.00 | 4.00 |
| Isopropyl alcohol | 12.00 | 12.00 | 12.00 | 12.00 | 12.00 | 12.00 | 12.00 |
| Na2EDTA | 0.50 | 0.50 | 0.50 | — | 0.50 | 0.50 | 0.50 |
| Propylene glycol | 20.00 | 20.00 | 20.00 | 20.00 | 20.00 | 20.00 | 20.00 |
| lauryl alcohol | 1.00 | 1.00 | 1.00 | 1.00 | 1.00 | 1.00 | 1.00 |
| Tomah AO-728 special (50%) | 14.00 | — | 14.00 | 14.00 | 14.00 | 14.00 | 14.00 |
| Ammonyx CDO (30%) | — | 15.00 | — | — | — | — | — |
| Biphenyl solvent A | 1.00 | 1.00 | 4.00 | 4.00 | 4.00 | — | — |
| Biphenyl solvent B | — | — | — | — | — | 4.00 | — |
| Biphenyl solvent C | — | — | — | — | — | — | 4.00 |
| Alkylpolyoxycarboxylate | — | — | — | 0.50 | — | — | — |
| Colorant | 0.03 | 0.03 | 0.03 | 0.03 | 0.03 | 0.03 | 0.03 |
| di water | q.s. | q.s. | q.s. | q.s. | q.s. | q.s. | q.s. |

Pine Oil 80 was a pine oil preparation containing at least 80%wt. terpene alcohols.
TomahAO-728 (50%) was *bis*-(2-hydroxyethyl $C_{12}$-$C_{15}$ alkyloxypropyl) amine oxide (50%wt. actives)
Ammonyx CDO (30%) was cocoamidopropyl dimethylamine oxide (30%wt. actives)
Biphenyl solvent A was NUSOLV ABP-103 (Arristec, Inc.) is a mixture of alkyl biphenyls
Biphenyl solvent B was SURE SOL 300 (Koch Chemical Co. ) is a mixture of alkyl biphenyls, specifically diisopropyl biphenyls (65%), triisopropyl biphenyls (30%) and other alkyl biphenyls (5%)
Biphenyl solvent C was SURE SOL 330 (Koch Chemical Co.) is a mixture of alkyl biphenyls
Alkylpolyoxycarboxlate was Emcol CNP 110 (Witco Chem. Co.) which also aids in solublizing the alkyl biphenyls in water
Na2EDTA was the disodium salt of ethylenediaminetetraacetic acid
di water was deionized water

**TABLE 1.3**

| | Comp3A | Ex.3.1 | Ex.3.2 | Ex.3.3 | Ex.3.4 | Ex.3.5 | Ex.3.6 |
|---|---|---|---|---|---|---|---|
| Pine Oil 60 | 9.00 | 3.00 | 6.00 | 8.00 | 5.00 | 4.00 | 7.00 |
| Isopropyl alcohol | 12.00 | 12.00 | 12.00 | 12.00 | 12.00 | 12.00 | 12.00 |
| GENAPOL 26-L-80 | 6.00 | 6.00 | 6.00 | 6.00 | 6.00 | 6.00 | 6.00 |
| VARONIC LI-63 | 1.70 | 1.70 | 1.70 | 1.70 | 1.70 | 1.70 | 1.70 |
| AMMONYX CDO Special | 0.75 | 0.75 | 0.75 | 0.75 | 0.75 | 0.75 | 0.75 |
| MONAMID 15-70W | 2.00 | 2.00 | 2.00 | 2.00 | 2.00 | 2.00 | 2.00 |
| BTC-835 (50%) | 1.60 | 1.60 | 1.60 | 1.60 | 1.60 | 1.60 | 1.60 |
| BTC-818 (50%) | 1.00 | 1.00 | 1.00 | 1.00 | 1.00 | 1.00 | 1.00 |
| benzyl alcohol | 0.75 | 0.75 | 0.75 | 0.75 | 0.75 | 0.75 | 0.75 |
| biphenyl solvent | --- | 6.00 | 3.00 | 1.00 | 4.00 | 5.00 | 2.00 |
| citric acid | 0.05 | 0.05 | 0.05 | 0.05 | 0.05 | 0.05 | 0.05 |
| di water | q.s. | q.s. | q.s. | q.s. | q.s. | q.s. | q.s. |

Pine Oil 60 was a pine oil preparation containing at least 60%wt. terpene alcohols (alpha terpineols)
Isopropyl alcohol, was propan-2-ol
GENAPOL 26-L-80, Linear C12-C16 alcohol ethoxylate, average of 9 moles of ethylene oxide (ex. Clariant)
VARONIC LI-63, was a PEG 30 glyceryl cocoate nonionic surfactant
AMMONYX CDO Special was a cocoamidopropyldimethylamine oxide
MONAMID 15-70W was a lineolamide diethanolamine
BTC-835 (50%) was an n-alkyl dimethyl benzyl ammonium chloride, 50% actives
BTC-818 (50%) was a dialkyl dimethyl ammonium chloride, 50% actives
benzyl alcohol was phenylmethanol
biphenyl solventwas NUSOLV ABP-103, diisopropylbiphenyl solvent
Na2EDTA was the disodium salt of ethylene diamine tetraacetic acid
*citric acid, was anhydrous citric acid*
di water was deionized water

**TABLE 1.3**

| | Ex.3.7 | Ex.3.8 | Ex.3.9 | Ex.3.10 | Ex.3.11 |
|---|---|---|---|---|---|
| d-Limonene | 4.00 | 4.00 | 3.00 | 5.00 | 6.00 |
| Isopropyl alcohol | 12.00 | 12.00 | 12.00 | 12.00 | 12.00 |
| GENAPOL 26-L-80 | 6.00 | 6.00 | 6.00 | 6.00 | 6.00 |
| VARONIC LI-63 | 1.70 | 1.70 | 1.70 | 1.70 | 1.70 |
| AMMONYX CDO Special | 0.75 | 0.75 | 0.75 | 0.75 | 0.75 |
| MONAMID 15-70W | 2.00 | 2.00 | 2.00 | 2.00 | 2.00 |
| BTC-835 (50%) | 1.60 | 1.60 | 1.60 | 1.60 | 1.60 |
| BTC-818 (50%) | 1.00 | 1.00 | 1.00 | 1.00 | 1.00 |
| benzyl alcohol | 0.75 | 0.75 | 0.75 | 0.75 | 0.75 |
| biphenyl solvent | 3.50 | 3.00 | 4.00 | 2.00 | 1.00 |
| Na2EDTA | 1.50 | 1.50 | 1.50 | 1.50 | 1.50 |
| citric acid | 0.05 | 0.05 | 0.05 | 0.05 | 0.05 |
| di water | q.s. | q.s. | q.s. | q.s. | q.s. |

d-Limonene, was a monoterpene containing at least 90%wt. of d-limonene
Isopropyl alcohol, was propan-2-ol
GENAPOL 26-L-80, Linear C12-C16 alcohol ethoxylate, average of 9 moles of ethylene oxide (ex. Clariant)
VARONIC LI-63, was a PEG 30 glyceryl cocoate nonionic surfactant
AMMONYX CDO Special was a cocoamidopropyldimethylamine oxide
MONAMID 15-70W was a lineolamide diethanolamine
BTC-835 (50%) was an n-alkyl dimethyl benzyl ammonium chloride, 50% actives
BTC-818 (50%) was a dialkyl dimethyl ammonium chloride, 50% actives
benzyl alcohol was phenylmethanol
biphenyl solventwas NUSOLV ABP-103, diisopropylbiphenyl solvent
Na2EDTA was the disodium salt of ethylene diamine tetraacetic acid
citric acid, was anhydrous citric acid
di water was deionized water

All of the formulations on Tables 1.1, 1.2 and 1.3 indicated weight percent, and the percent actives of individual constituents are 100% unless otherwise indicated.

The blooming characteristics of certain compositions described on Tables 1.1 and 1.2 was characterized by using the Brinkman Sybron PC 801 colorimeter. Each tested formulation were diluted with deionized water in a weight ratio of 1:64, and the test was carried out with each of the formulations and water at room temperature (68°F. 20°C). The resulting determined values, reported as "blooming" in the following table provide an empirical evaluation in percent transmittance (%) of the degree of transparency of a diluted example formulation wherein 0% indicates complete opacity and 100% the transparency of a deionized water sample. The result was tabulated as follows:

TABLE 2

| Formulation: | % Transmittance |
|---|---|
| Comp.1 | 26.2 |
| Ex.1.1 | 1.1 |
| Ex.1.2 | 0.9 |
| Ex.1.3 | 3.6 |
| Ex.1.4 | 1.8 |
| Ex.1.5 | 1.9 |
| Ex.1.6 | 3.0 |
| Ex.1.7 | 2.7 |
| Ex.1.8 | 2.2 |
| Ex.1.9 | 1.3 |
| Ex.2.1 | 2.4 |
| Ex.2.2 | 3.1 |
| Ex.2.3 | 0.7 |
| Ex.2.4 | 0.9 |
| Ex.2.5 | 0.5 |
| Ex.2.6 | 0.7 |
| Ex.2.7 | 0.9 |
| Comparative 1 (Comp.1) was as indicated on Table 1.1, above. | |

As may be seen from the results indicated on Table 2, the formulation according to comparative example 1 (Comp.1) which did not include the biphenyl solvent did not give intense "bloom". In contrast, the formulations according to the first and second aspects of the invention provided an excellent blooming effect

The formulations of Ex. 1.2, 2.3, 2.4 and 2.5 were diluted with deionised water in a weight ratio of 1:64, at room temperature (68°F, 20°C), and the degree of transparency was determined using the apparatus and method described above. For comparative purposes, a formulation ("Comp. 3")from the prior art, namely Ex. 3 from Table 1 of US 5629280 was prepared in accordance with the teaching in that patent, and similarly diluted and tested. These diluted formulations were evaluated over an eight day period at intervals so to determine the long term blooming behaviour of the respective compositions. All of the formulations and compositions were maintained at room temperature (68°F, 20°C) throughout the duration of the test The results are indicated on Table 3.

| TABLE 3 | | |
|---|---|---|
| | % Transmittance | |
| Day: | Ex.1.2 | Comp.3 |
| Initial (as mixed) | 1.2 | 5.9 |
| Day 1 | 1.2 | 24.1 |
| Day 2 | 1.2 | 29.6 |
| Day 3 | 1.3 | 49.9 |
| Day 6 | 1.4 | 76.1 |
| Day 8 | 1.2 | 86.5 |

Comp. 3 was Ex. 3 from Table 1 of US 5629280

| TABLE 3 (CONTINUED) | | | |
|---|---|---|---|
| | % Transmittance | | |
| Day: | Ex.2.3 | Ex.2.4 | Ex.2.5 |
| Initial (as mixed) | 0.3 | 3.0 | 0.3 |
| Day 1 | 0.3 | 3.7 | 0.4 |
| Day 2 | --- | --- | --- |
| Day 3 | --- | --- | --- |
| Day 4 | 0.6 | 1.6 | 0.5 |
| Day 5 | 0.5 | 1.5 | 0.7 |
| Day 6 | 0.3 | 1.4 | 0.5 |
| Day 7 | 0.4 | 1.3 | 0.5 |
| Day 8 | --- | --- | --- |

"---" indicates not tested, as it was visually observed that no discernible change had occurred since the previous test

As the results of Table 3 indicate, the compositions according to the present invention provided superior results, both with respect to initial blooming property in the "as mixed" dilutions, but also maintained excellent blooming characteristics over a longer duration.

The blooming characteristics of the formulations according to the third aspect of the invention were also characterized by using the Brinkman Sybron PC 801 colorimeter. Each tested formulation were diluted with deionized water In a weight ratio of 1:64, and the test was carried out with each of the formulations and water at room temperature (68°F, 20°C), as described above. Blooming characteristics of these formulations was evaluated both initially, and on a long term. All of the formulations and compositions were maintained at room temperature (68°F, 20°C) throughout the duration of the test. The results are indicated on Table 3.3.

**Table 3.3**

| | Initial | 1 hour | 2 hours | 4 hours | 6 hours | 24 hours | 48 hours | 72 hours | 96 hours | 168 hours |
|---|---|---|---|---|---|---|---|---|---|---|
| Comp.3A | 70.7 | 75.1 | 75.7 | 76.3 | 76.9 | 81.4 | 83.3 | 86.7 | 89.4 | 93.7 |
| Ex.3.1 | 98.7 | 93.5 | 87.0 | 76.0 | 68.5 | 26.0 | 10.8 | 5.3 | 3.2 | 1.3 |
| Ex.3.2 | 99.8 | 99.8 | 99.7 | 99.4 | 99.9 | 100 | 99.1 | 99.4 | 99.2 | 99.8 |
| Ex.3.3 | 67.3 | 76.3 | 77.4 | 78.4 | 79.0 | 82.7 | 82.4 | 84.7 | 85.7 | 88.6 |
| Ex.3.4 | 99.9 | 98.8 | 96.7 | 93.4 | 91.8 | 75.4 | 66.6 | 59.6 | 56.6 | 52.4 |
| Ex.3.5 | 99.3 | 96.2 | 92.3 | 85.4 | 81.6 | 47.8 | 29.3 | 19.8 | 14.9 | 8.4 |
| Ex.3.6 | 83.4 | 90.5 | 91.3 | 92.0 | 92.3 | 95.6 | 94.5 | 95.6 | 96.0 | 96.6 |
| Ex.3.7 | 98.1 | 89.9 | 78.0 | 73.5 | --- | 31.5 | 21.1 | 19.4 | --- | 23.2 |
| Ex.3.8 | 98.6 | 91.3 | 85.0 | 76.0 | --- | 39.5 | 40.6 | 53.0 | --- | 78.8 |
| Ex.3.9 | 98.3 | 90.4 | 83.7 | 73.9 | --- | 27.4 | 14.7 | 11.3 | --- | 8.9 |
| Ex.3.10 | 98.1 | 90.1 | 82.2 | 71.9 | --- | 50.3 | 79.7 | 92.5 | --- | 100 |
| Ex.3.11 | 99.5 | 100 | 99.6 | 100 | --- | 100 | 100 | 100 | --- | 100 |

'---' indicates that the light transmittance was not tested for the indicated time interval

As may be seen from the results indicated on Table 3.3, the formulations according to the third aspect of the invention provided comparable or superior initial and short term (viz., to 2 hours) blooming when diluted in a larger quantity of water a compared to the formulation of Comp. 3A which included 9% of the pine oil constituent, but no

biphenyl solvent. Further, certain of the dilutions of the concentrate compositions according to the invention which included the biphenyl solvent but which had reduced amounts of pine oil constituents provided excellent retention of blooming, particularly evidenced in the latter days of the test.

Antimicrobial efficacy

A modified European suspension test was carried out for formulations according to the first aspect of the invention, Examples 1.1, and 1.2 described above and as a comparative example, DETTOL (ex. Reckitt & Colman PLC, England). The method is summarized as follow.

1) Pipette 8 ml of the test product dilution into sterile medicant tube and held at 20C + 1C in water bath.
2) In another sterile medicant tube pipette 1.0 ml of adjusted culture and 1.0 ml of prepared Bovine Albumin Solution and held at 20C + 1C in water bath.
3) At time =0 minute, add product solution into medicant tube containing a mixture of Bovine Albumin Solution and culture suspension of each test organism. This mixture results in a final dilution of the test product, a concentration of 0.03% of Bovine Albumin Solution and bacterial count of at least 1-3 x 10^7 CFU/ml.
4) At time =5 minutes, pipette 1 ml of this mixture into 9 ml of neutralizing solution (letheen broth) so as to achieve 1:10 dilution., Prepare serial dilution in Letheen broth and place with Tryticase soy with lecithin and Tween 80 agar in duplicate.

Control: The procedure as outlined above was repeated, using 8 ml of sterile water instead of product dilution for each test organism.

To pass the test method, it was required that the tested formulations satisfa a 5 log reduction in reference bacterial strain of *S.aureus* (ATTC #5438), *Ps.aeruginosa* (ATTC #15442), *Escherichia coli* (ATTC #10536), with 5 minutes contact time at 20°C + 1°C under defined testing method. It was found that each of the formulastions (Ex.1, Ex.2) showed complete reduction of the test organisms at the testing contact time. The testing requirements indicate a (great than) ">5" log reduction within 5 minutes. All the above samples exceed this requirement. It was concluded that formulations according to Ex. 1.1 and 1.2 have at least the same microbial activity as DETTOL

Several of the exemplary formulations described in more detail on Table 1 above were evaluated in order to evaluate their antimicrobial efficacy against *Staphylococcus aureus* (gram positive type pathogenic bacteria) (ATCC 6538), *Salmonella choleraesuis* (gram negative type pathogenic bacteria) (ATCC 10708), and *Pseudomonas aeruginosa* (gram negative type pathogenic bacteria) (ATCC 15442). The testing was performed in accordance with the protocols outlined in "Use-Dilution Method", Protocols 955.14, 955.15 and 964.02 described in Chapter 6 of "Official Methods of Analysis", 16$^{th}$ Edition, of the Association of Official Analytical Chemists; "Germicidal and Detergent Sanitizing Action of Disinfectants", 960.09 described in Chapter 6 of "Official Methods of Analysis", 15$^{th}$ Edition, of the Association of Official Analytical Chemists; or American Society for Testing and Materials (ASTM) E 1054-91 the contents of which are herein incorporated by reference. This test is also commonly referred to as the "AOAC Use-Dilution Test Method".

As is appreciated by the skilled practitioner in the art, the results of the AOAC Use-Dilution Test Method indicates the number of test substrates wherein the tested organism remains viable after contact for 10 minutes with at test disinfecting composition / total number of tested substrates (cylinders) evaluated in accordance with the AOAC Use-Dilution Test. Thus, a result of "0/60" indicates that of 60 test substrates bearing the test organism and contacted for 10 minutes in a test disinfecting composition, 0 or 1 test substrates had viable (live) test organisms at the conclusion of the test. Such a result is excellent, illustrating the excellent disinfecting efficacy of the tested composition.

Results of the antimicrobial testing are indicated on the Table, below. The reported results indicate the number of test cylinders with live test organisms/number of test cylinders tested for each example formulation and organism tested.

Table-

| **Antimicrobial Efficacy** | | |
|---|---|---|
| Formulation | *Staphylococcus aureus* | *Salmonella choleraesuis* |
| Ex.1 | 0/60 | 0/60 |
| Ex.2 | 0/60 | 0/60 |
| Ex.3 | 1/60 | 0/60 |

As may be seen from the results indicated above, the compositions according to the invention provide excellent sanitizing benefits to hard surfaces as demonstrated by the excellent antimicrobial efficacy of these compositions against known bacteria

Cleaning Test

Cleaning efficacy was measured for weight ratios of 1:64 (concentrate composition:water) aqeuous dilutions of various formulations according to the invention, as well as a comparative composition. The test was carried out using the ASTM D4488-89, Annex A2 method-greasy soil on painted masonite wallboard test, using a Gardner Washability Apparatus.

Latex painted masonite wallboard is soiled with a mixture of melted, oily soils containing a small amount of carbon black and allowed to set overnight. A first aqueous dilution is applied to a sponge that scrubs half the soiled substrate in a straight-line using the Gardner Washability Apparatus. Afterwards, the second aqueous dilution is applied to a further sponge that scrubs the other half of the soiled substrate in a similar manner.

In determining the cleaning efficiency, reflectance values were determined using a Gardner Lab Scan Reflectometer for each of the following: a clean unsoiled panel, a soiled panel, and a soiled panel following Gardner Washability Apparatus scrubbing; Such reflectance values were then employed to calculate % cleaning efficiency according to the following formula:

$$\%\ \text{Cleaning Efficiency} = \frac{\text{Lt - Ls}}{\text{Lo - Ls}} \times 100\%$$

wherein,

Lt = % reflectance average after scrubbing solid tile
Ls = % reflectance average before cleaning soiled tile
Lo = % reflectance average original tile before soiling

Cleaning efficiency results for Formulation 1 are shown in TABLE 4, hereinafter.

TABLE 4

| **Test #** | Formulation: water (1:64) w/w dilution | unsoiled reflectance (Lo) | soiled reflectance (Ls) | After scrubbing reflectance (Lt) | % Cleaning Efficiency |
|---|---|---|---|---|---|
| Comp.A Comp. A | 1:64 | 94.09 | 24.89 | 65.26 | 58.34 |
| Ex.1.2 | 1:64 | 94.03 | 25.72 | 56.10 | 44.5 |
| Ex.2.1 | 1:64 | 94.09 | 24.89 | 66.41 | 60.00 |
| Ex.2.2 | 1:64 | 94.09 | 24.89 | 60.49 | 51.45 |
| Ex.2.3 | 1:64 | 94.09 | 24.89 | 63.06 | 55.16 |
| Ex.3.1 | 1:64 | 93.58 | 27.73 | 66.89 | 59.47 |
| Ex.3.2 | 1:64 | 93.19 | 25.44 | 66.34 | 60.37 |
| Ex.3.3 | 1:64 | 93.70 | 27.20 | 67.06 | 59.94 |

Comparative A (Comp,A) was DETTOL (Reckitt & Colman PLC, Hull, UK)), a soap based, blooming type disinfecting concentrate composition which does not include biphenyl solvents. DETTOL has a particularly substantive bloom and is used as a 'benchmark' for other formulations.

As shown, the measurement of the cleaning effectiveness of the test samples involved the ability of the cleaning composition to remove the test soil from the test substrate. This was expressed by % Cleaning Efficiency. As numerical values for a % Cleaning Efficiency increase, higher cleaning effectiveness is achieved for the cleaning composition tested. As the results show, the inventive composition showed an excellent cleaning property.

## Claims

**1.** An aqueous concentrated liquid hard surface cleaning composition which blooms when added to a larger volume of water which comprises:

a terpene based solvent or a pine oil constituent;
optionally, a germicidal cationic surfactant;
an additional organic solvent constituent;
a binary co-solvent system comprising an alkyl diphenyl solvent and a co-solvent in addition to the above solvent constituents and,
optionally an amine oxide surfactant;
optionally a nonionic surfactant;
optionally but desirably at least one optional constituent selected from:

chelating agents, coloring agent, light stabilizers, fragrances; thickening agents, hydrotropes, pH adjusting agents, pH buffers, one or more detersive surfactant constituents, and
water.

**2.** The aqueous concentrated liquid composition according to claim 1 which includes a pine oil constituent which comprises at least 60% terpene alcohols.

**3.** The aqueous concentrated composition according to claim 1 which comprises amine oxide surfactant represented by the formula:

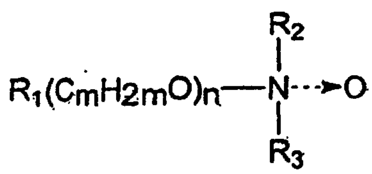

wherein

$R_1$ is hydrogen or is an alkyl 2-hydroxyalkyl, 3-hydroxyalkyl, or 3-alkoxy-2-hydroxypropyl radical where the alkyl and alkoxy parts contain from about 8 to about 18 carbon atoms,
$R_2$ and $R_3$ are independently selected from methyl, ethyl, propyl, isopropyl, 2-hydroxyethyl. 2-hydroxypropyl, or 3-hydroxypropyl,
m is an integer from 2 to 4, and
n is an integer from 0 to 10.

**4.** The aqueous concentrated composition according to claim 3 wherein the amine oxide surfactant is represented by the formula:

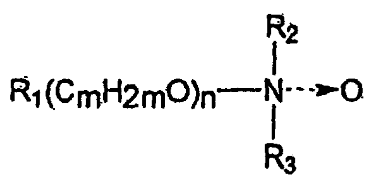

wherein, $R_1$ is an alkyl radical of from 12 to 16 carbon atoms,
$R_2$ and $R_3$ are independently selected from methyl or ethyl,
m is 2, and
n is 0.

**5.** A composition according to claim 1 which includes a quaternary ammonium compound as the germicidal cationic

surfactant.

**6.** A composition according to claim 5 which includes as the germicidal cationic surfactant, a quaternary ammonium compound which may be represented by the formula:

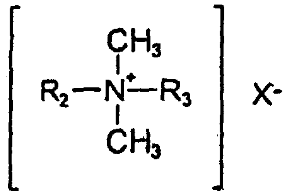

wherein

$R_2$ and $R_3$ are the same or different $C_8$-$C_{12}$alkyl groups, or $R_2$ is $C_{12\text{-}18}$alkyl, $C_{8\text{-}18}$alkylethoxy, $C_{8\text{-}18}$alkylphenolethoxy when $R_3$ is benzyl, and
X is a halide.

**7.** The aqueous concentrated liquid composition according to any preceding claim, wherein the alkyl diphenyl solvent is represented according to the structure:

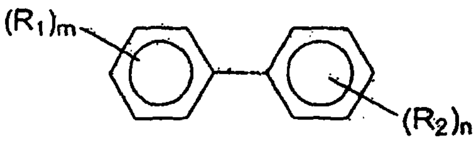

wherein:

$R_1$ is hydrogen or is a lower alkyl radical, preferably a $C_1$-$C_{10}$, but more prelerably is a $C_1$-$C_6$ straight chained or branched alkyl radical,
$R_2$ is a lower alkyl radical, preferably a $C_1$-$C_{10}$. but more preferably is a $C_1$-$C_8$ straight chained or branched alkyl radical,
m is an integer from 1-3 inclusive; and,
n is an integer from 1-3 inclusive.

**8.** The aqueous concentrated composition according to claim 7 wherein:

$R_1$ is hydrogen,
m is 1,
n is an integer from i - 3, inclusive, and,
$R_2$ is a $C_1$-$C_6$ straight chained or branched alkyl radical.

**9.** An aqueous concentrated composition according to any preceding claim **characterized in that** when the said concentrated composition is diluted with water at a weight ratio of concentrate:water of 1:64 at room temperature, the resultant composition exhibits a reduction in light transmittance of at least 50%.

**10.** An aqueous concentrated liquid composition according to claim 1 which comprises:

1-12 %wt. of pine oil constituent, preferably having at least 60% terpene alcohols;
0.5-8 %wt. of a germicidal cationic surfactant, preferably a quaternary ammonium compound having germicidal properties;
0.1 - 35 %wt. of an additional organic solvent constituent, preferably both an alkylene glycol and a monohydric lower aliphatic alcohol
0.2-4 %wt. of a binary co-solvent system comprising an alkyl diphenyl solvent and a co-solvent in addition to the above solvent constituents
0-20 %wt. of at least one optional constituent as described above; and,

to 100 %wt. water.

**11.** An aqueous concentrated liquid composition according to claim 1 which comprises:

1 - 12%wt. of pine oil constituent, preferably having at least 60% terpene alcohols;
0.1-35%wt of an additional organic solvent constituent;
0.1- 12%wt. of a binary co-solvent system comprising an alkyl diphenyl solvent and a co-solvent in addition to the above solvent constituents
1-20 %wt. of an amine oxide surfactant
0-20 %wt. of at least one optional constituent as described above; and,
to 100%wt. water.

**12.** An aqueous concentrated liquid composition according to claim 1 which comprises:

1-12%wt. terpene solvent containing constituent;
0.5-8%wt. germicidal cationic surfactant, preferably a quaternary ammonium compound having germicidal properties;
0.1-15% wt. of an additional organic solvent constituent;
1-12% wt. of a binary co-solvent system comprising an alkyl diphenyl solvent and a co-solvent; in addition to the above solvent constituents.
1-20%wt. one or more nonionic surfactants;
0-20 %wt. of at least one optional constituent as described above; and,
to 100%wt. of water.

**13.** A process for cleaning a hard surface which comprises the process step of:

contacting the hard surface with a disinfecting effective amount of the composition according to any preceding claim.

**Patentansprüche**

**1.** Wäßrige konzentrierte flüssige Reinigungszusammensetzung für harte Oberflächen, welche trübe wird, wenn sie zu einem größeren Volumen Wasser zugegeben wird, wobei die Zusammensetzung umfaßt:

ein Lösungsmittel auf Terpenbasis oder einen Kiefemnadelöl-Bestandteil;
gegebenenfalls ein keimtötendes kationisches oberflächenaktives Mittel;
einen zusätzlichen organischen Lösungsmittel-Bestandteil;
ein binäres Colösungsmittelsystem umfassend ein Alkyldiphenyl-Lösungsmittel und ein Colösungsmittel zusätzlich zu den obigen Lösungsmittel-Bestandteilen; und
gegebenenfalls ein oberflächenaktives Mittel vom Aminoxid-Typ;
gegebenenfalls ein nicht-ionisches oberflächenaktives Mittel;
gegebenenfalls, jedoch wünschenswerterweise mindestens einen fakultativen Bestandteil, ausgewählt aus:

Chelatbildnern, Farbmitteln, Lichtstabilisatoren, Duftstoffen, Verdickungsmitteln, Hydrotropika, pH-einstellenden Mitteln, pH-Puffern, einem oder mehreren reinigenden oberflächenaktiven Bestandteilen und Wasser.

**2.** Wäßrige konzentrierte flüssige Zusammensetzung nach Anspruch 1, welche einen Kiefernnadelöl-Bestandteil beinhaltet, der mindestens 60% Terpen-Alkohole umfaßt.

**3.** Wäßrige konzentrierte Zusammensetzung nach Anspruch 1, welche ein oberflächenaktives Mittel vom Aminoxid-Typ der folgenden Formel umfaßt:

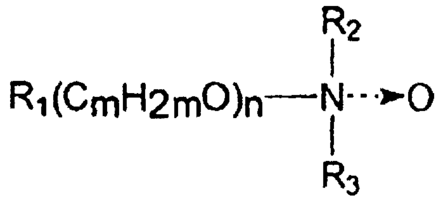

wobei

$R_1$ für ein Wasserstoffatom oder einen Alkyl-, 2-Hydroxyalkyl-, 3-Hydroxyalkyl- oder 3-Alkoxy-2-hydroxypropylrest steht, wobei die Alkyl- und Alkoxyteile etwa 8 bis etwa 18 Kohlenstoffatome enthalten,
$R_2$ und $R_3$ unabhängig aus einer Methyl-, Ethyl-, Propyl-, Isopropyl-, 2-Hydroxyethyl-, 2-Hydroxypropyl- oder 3-Hydroxypropylgruppe ausgewählt sind,
m eine ganze Zahl von 2 bis 4 ist, und
n eine ganze Zahl von 0 bis 10 ist.

**4.** Wäßrige konzentrierte Zusammensetzung nach Anspruch 3, wobei das oberflächenaktive Mittel vom Aminoxid-Typ durch die folgende Formel dargestellt ist:

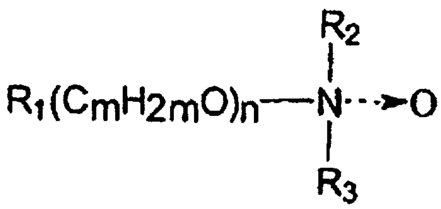

wobei

$R_1$ einen Alkylrest mit 12 bis 16 Kohlenstoffatomen darstellt,
$R_2$ und $R_3$ unabhängig aus einer Methyl- oder Ethylgruppe ausgewählt sind,
m 2 ist, und
n 0 ist.

**5.** Zusammensetzung nach Anspruch 1, welche eine quartäre Ammoniumverbindung als das keimtötende kationische oberflächenaktive Mittel beinhaltet.

**6.** Zusammensetzung nach Anspruch 5, welche als das keimtötende kationische oberflächenaktive Mittel eine quartäre Ammoniumverbindung beinhaltet, die durch die folgende Formel dargestellt sein kann:

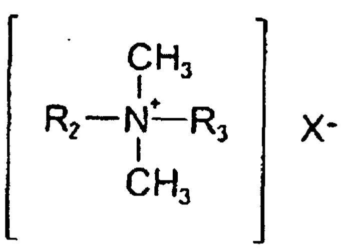

wobei

$R_2$ und $R_3$ die gleichen oder verschiedene $C_8$-$C_{12}$-Alkylreste darstellen oder $R_2$ einen $C_{12}$-$C_{16}$-Alkyl-, $C_8$-$C_{18}$-Alkylethoxy- oder $C_8$-$C_{18}$-Alkylphenolethoxyrest darstellt, wenn $R_3$ ein Benzylrest ist und
X ein Halogenid ist.

**7.** Wäßrige konzentrierte flüssige Zusammensetzung nach einem der vorhergehenden Ansprüche, wobei das Alkyldiphenyl-Lösungsmittel die folgende Struktur aufweist:

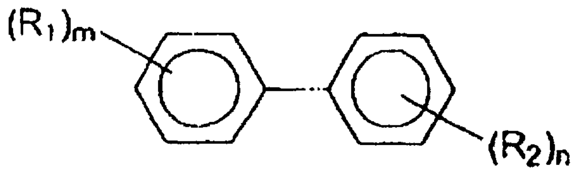

wobei

$R_1$ ein Wasserstoffatom oder einen Niederalkylrest, vorzugsweise einen $C_1$-$C_{10}$-, jedoch mehr bevorzugt einen geradkettigen oder verzweigten $C_1$-$C_6$-Alkylrest darstellt, $R_2$ einen Niederalkylrest, vorzugsweise einen $C_1$-$C_{10}$-, jedoch mehr bevorzugt einen geradkettigen oder verzweigten $C_1$-$C_6$-Alkylrest darstellt,
m eine ganze Zahl von 1 bis 3, einschließlich, ist; und
n eine ganze Zahl von 1 bis 3, einschließlich, ist.

**8.** Wäßrige konzentrierte Zusammensetzung nach Anspruch 7, wobei:

$R_1$ ein Wasserstoffatom darstellt,
m 1 ist,
n eine ganze Zahl von 1 bis 3, einschließlich, ist, und
$R_2$ einen geradkettigen oder verzweigten $C_1$-$C_6$-Alkylrest darstellt.

**9.** Wäßrige konzentrierte Zusammensetzung nach einem der vorhergehenden Ansprüche, **dadurch gekennzeichnet, dass** wenn die konzentrierte Zusammensetzung mit Wasser in einem Gewichtsverhältnis von Konzentrat: Wasser von 1:64 bei Raumtemperatur verdünnt wird, die resultierende Zusammensetzung eine Abnahme der Lichtdurchlässigkeit von mindestens 50% aufweist.

**10.** Wäßrige konzentrierte flüssige Zusammensetzung nach Anspruch 1, welche umfaßt:

1 bis 12 Gew.-% Kiefernnadelöl-Bestandteil, vorzugsweise mit mindestens 60% Terpen-Alkoholen;
0,5 bis 8 Gew.-% eines keimtötenden kationischen oberflächenaktiven Mittels, vorzugsweise einer quartären Ammoniumverbindung mit keimtötenden Eigenschaften;
0,1 bis 35 Gew.-% eines zusätzlichen organischen Lösungsmittel-Bestandteils; vorzugsweise sowohl eines Alkylenglykols als auch eines einwertigen niederen aliphatischen Alkohols;
0,2 bis 4 Gew.-% eines binären Colösungsmittelsystems umfassend ein Alkyldiphenyl-Lösungsmittel und ein Colösungsmittel zusätzlich zu den obigen Lösungsmittel-Bestandteilen;
0 bis 20 Gew.-% mindestens eines wie oben beschriebenen fakultativen Bestandteils; und
Wasser, um 100 Gew.-% zu ergeben.

**11.** Wäßrige konzentrierte flüssige Zusammensetzung nach Anspruch 1, welche umfaßt:

1 bis 12 Gew.-% Kiefernnadelöl-Bestandteil, vorzugsweise mit mindestens 60% Terpen-Alkoholen;
0,1 bis 35 Gew.-% eines zusätzlichen-organischen Lösungsmittel-Bestandteils;
0,1 bis 12 Gew.-% eines binären Colösungsmittelsystems umfassend ein Alkyldiphenyl-Lösungsmittel und ein Colösungsmittel zusätzlich zu den obigen Lösungsmittel-Bestandteilen;
1 bis 20 Gew.-% eines oberflächenaktiven Mittels vom Aminoxid-Typ;
0 bis 20 Gew.-% mindestens eines wie oben beschriebenen fakultativen Bestandteils; und
Wasser, um 100 Gew.-% zu ergeben.

**12.** Wäßrige konzentrierte flüssige Zusammensetzung nach Anspruch 1, welche umfaßt:

1 bis 12 Gew.-% Terpen-Lösungsmittel enthaltenden Bestandteil;
0,5 bis 8 Gew.-% keimtötendes kationisches oberflächenaktives Mittel, vorzugsweise eine quartäre Ammoniumverbindung mit keimtötenden Eigenschaften;
0,1 bis 15 Gew.-% eines zusätzlichen organischen Lösungsmittel-Bestandteils;
1 bis 12 Gew.-% eines binären Colösungsmittelsystems umfassend ein Alkyldiphenyl-Lösungsmittel und ein Colösungsmittel zusätzlich zu den obigen Lösungsmittel-Bestandteilen;
1 bis 20 Gew.-% eines oder mehrerer nicht-ionischer oberflächenaktiver Mittel;
0 bis 20 Gew.-% mindestens eines wie oben beschriebenen fakultativen Bestandteils; und
Wasser, um 100 Gew.-% zu ergeben.

**13.** Verfahren zur Reinigung einer harten Oberfläche, wobei das Verfahren den folgenden Verfahrensschritt umfaßt:

Kontaktieren der harten Oberfläche mit einer wirksamen desinfizierenden Menge der Zusammensetzung nach einem der vorhergehenden Ansprüche.

## Revendications

**1.** Composition aqueuse concentrée liquide pour le nettoyage de surfaces dures, qui présente une opalescence lorsqu'elle est ajoutée à un plus grand volume d'eau, qui comprend :

un constituant du type solvant à base terpénique ou essence de pin;
facultativement un agent tensio-actif cationique germicide ;
un constituant supplémentaire consistant en un solvant organique;
un système de cosolvant binaire comprenant un solvant alkyldiphénylique et un cosolvant, en plus du constituant servant de solvant ci-dessus, et
facultativement un agent tensio-actif du type oxyde d'amine ;
facultativement un agent tensio-actif non ionique ;
facultativement mais avantageusement au moins un constituant facultatif choisi entre :

des agents chélatants, des agents colorants, des photostabilisants, des parfums, des agents épaississants, des hydrotropes, des agents d'ajustement du pH, des tampons de pH, un ou plusieurs constituants tensio-actifs détersifs et
de l'eau.

**2.** Composition aqueuse concentrée liquide suivant la revendication 1, qui comprend un constituant du type essence de pin comprenant au moins 60 % d'alcools terpéniques.

**3.** Composition aqueuse concentrée suivant la revendication 1, qui comprend un agent tensio-actif du type oxyde d'amine représenté par la formule :

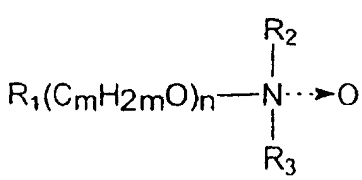

dans laquelle

| | |
|---|---|
| $R_1$ | représente un atome d'hydrogène ou un radical alkyle, 2-hydroxyalkyle, 3-hydroxyalkyle ou 3-alkoxy-2-hydroxypropyle dans lequel les parties alkyle et alkoxy contiennent environ 8 à environ 18 atomes de carbone, |
| $R_2$ et $R_3$ | sont choisis, indépendamment, entre des groupes méthyle, éthyle, propyle, isopropyle, 2-hydroxyéthyle, 2-hydroxypropyle et 3-hydroxypropyle, |
| m | représente un nombre entier de 2 à 4, et |
| n | représente un nombre entier de 0 à 10. |

**4.** Composition aqueuse concentrée suivant la revendication 3, dans laquelle l'agent tensio-actif du type oxyde d'amine est représenté par la formule :

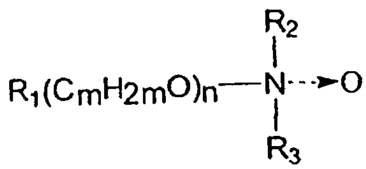

dans laquelle

- $R_1$ représente un radical alkyle ayant 12 à 16 atomes de carbone, $R_2$ et $R_3$ sont choisis, indépendamment, entre des groupes méthyle et éthyle,
- m est égal à 2, et
- n est égal à 0.

**5.** Composition suivant la revendication 1, qui comprend un composé d'ammonium quaternaire comme agent tensio-actif cationique germicide.

**6.** Composition suivant la revendication 5, qui comprend, comme agent tensio-actif cationique germicide, un composé d'ammonium quaternaire qui peut être représenté par la formule :

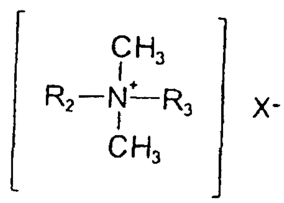

dans laquelle

- $R_2$ et $R_3$ représentent des groupes alkyle en $C_8$ à $C_{12}$ identiques ou différents, ou bien $R_2$ représente un groupe alkyle en $C_{12}$ à $C_{16}$, (alkyle en $C_8$ à $C_{18}$) éthoxy, (alkyle en $C_8$ à $C_{18}$) phénoléthoxy lorsque $R_3$ représente un groupe benzyle, et
- X représente un halogénure.

**7.** Composition aqueuse concentrée liquide suivant l'une quelconque des revendications précédentes, dans laquelle le solvant alkyldiphénylique est représenté par la structure :

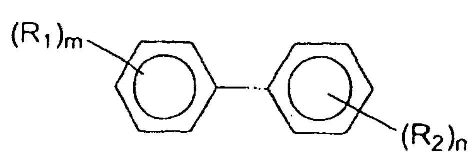

dans laquelle

- $R_1$ représente un atome d'hydrogène ou un radical alkyle inférieur, avantageusement en $C_1$ à $C_{10}$, plus avantageusement un radical alkyle en $C_1$ à $C_6$ à chaîne droite ou ramifié,
- $R_2$ représente un radical alkyle inférieur, avantageusement en $C_1$ à $C_{10}$, plus avantageusement un radical alkyle en $C_1$ à $C_6$ à chaîne droite ou ramifié,
- m représente un nombre entier de 1 à 3 inclus ; et
- n représente un nombre entier de 1 à 3 inclus.

**8.** Composition aqueuse concentrée suivant la revendication 7, dans laquelle :

$R_1$ représente un atome d'hydrogène,
m est égal à 1,
n représente un nombre entier de 1 à 3 inclus et
$R_2$ représente un radical en $C_1$ à $C_6$ à chaîne droite ou ramifié.

**9.** Composition aqueuse concentrée suivant l'une quelconque des revendications précédentes, **caractérisée en ce que**, lorsque ladite composition concentrée est diluée avec de l'eau en un rapport pondéral concentré : eau égal à 1:64 à température ambiante, la composition résultante présente une réduction de transmittance de la lumière d'au moins 50 %.

**10.** Composition aqueuse concentrée liquide suivant la revendication 1, qui comprend :

1 à 12 % en poids d'un constituant du type essence de pin, comprenant de préférence au moins 60 % d'alcools terpéniques ;
0,5 à 8 % en poids d'un agent tensio-actif cationique germicide, de préférence un composé d'ammonium quaternaire ayant des propriétés germicides ;
0,1 à 35 % en poids d'un constituant supplémentaire du type solvant organique, de préférence à la fois un alkylène-glycol et un alcool aliphatique inférieur mono-hydroxylique;
0,2 à 4 % en poids d'un système de cosolvant binaire comprenant un solvant alkyldiphénylique et un cosolvant, en plus des constituants ci-dessus servant de solvants;
0 à 20 % en poids d'au moins un constituant facultatif répondant à la description précitée ; et
de l'eau jusqu'à 100 % en poids.

**11.** Composition aqueuse concentrée liquide suivant la revendication 1, qui comprend :

1 à 12 % en poids d'un constituant du type essence de pin, comprenant de préférence au moins 60 % d'alcools terpéniques ;
0,1 à 35 % en poids d'un constituant supplémentaire consistant en un solvant organique ;
0,1 à 12 % en poids d'un système de cosolvant binaire comprenant un solvant alkyldiphénylique et un cosolvant, en plus des constituants précités servant de solvants ;
1 à 20 % en poids d'un agent tensio-actif du type oxyde d'aminé ;
0 à 20 % en poids d'au moins un constituant facultatif répondant à la description précitée ; et
de l'eau jusqu'à 100 % en poids.

**12.** Composition aqueuse concentrée liquide suivant la revendication 1, qui comprend :

1 à 12 % en poids d'un constituant contenant un solvant terpénique ;
0,5 à 8 % en poids d'un agent tensio-actif cationique germicide, de préférence un composé d'ammonium quaternaire ayant des propriétés germicides ;
0,1 à 15 % en poids d'un constituant supplémentaire du type solvant organique ;
1 à 12 % en poids d'un système de cosolvant binaire comprenant un solvant alkyldiphénylique et un cosolvant, en plus des constituants servant de solvants ci-dessus ;
1 à 20 % en poids d'un ou plusieurs agents tensio-actifs non ioniques ;
0 à 20 % en poids d'au moins un constituant facultatif répondant à la description précitée ; et
de l'eau jusqu'à 100 % en poids.

**13.** Procédé pour le nettoyage d'une surface dure, qui comprend l'étape de procédé consistant :

à mettre en contact la surface dure avec une quantité désinfectante efficace de la composition suivant l'une quelconque des revendications précédentes.